(19) Europäisches Patentamt
European Patent Office
Office européen des brevets

(11) EP 4 056 599 B1

(12) # EUROPEAN PATENT SPECIFICATION

(45) Date of publication and mention of the grant of the patent:
**26.07.2023 Bulletin 2023/30**

(21) Application number: **21161497.9**

(22) Date of filing: **09.03.2021**

(51) International Patent Classification (IPC):
***C08F 2/00*** *(2006.01)* ***C08F 210/16*** *(2006.01)*
***C08L 23/08*** *(2006.01)* ***C08F 4/659*** *(2006.01)*

(52) Cooperative Patent Classification (CPC):
(C-Sets available)
**C08L 23/0815; C08F 210/16;** C08F 4/65912; C08F 4/65916; C08L 2203/162; C08L 2205/025; C08L 2205/03; C08L 2308/00; C08L 2314/06

(Cont.)

(54) **POLYETHYLENE COMPOSITION FOR A FILM LAYER**

POLYETHYLENZUSAMMENSETZUNG FÜR EINE FOLIENSCHICHT

COMPOSITION DE POLYÉTHYLÈNE POUR UNE COUCHE DE FILM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.09.2022 Bulletin 2022/37**

(73) Proprietor: **Borealis AG**
**1020 Vienna (AT)**

(72) Inventors:
- **WANG, Jingbo**
  **4021 Linz (AT)**
- **BERGER, Friedrich**
  **4021 Linz (AT)**
- **AHO, Jani**
  **06101 Porvoo (FI)**

(74) Representative: **Kador & Partner Part mbB**
**Corneliusstraße 15**
**80469 München (DE)**

(56) References cited:
**EP-A1- 1 674 490** **WO-A1-2021/009191**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 056 599 B1

(52) Cooperative Patent Classification (CPC): (Cont.)

C-Sets
**C08F 210/16, C08F 2/001;**
**C08F 210/16, C08F 4/6492;**
**C08F 210/16, C08F 4/65925;**
**C08L 23/0815, C08L 23/0815, C08L 23/0815;**
C08F 210/16, C08F 210/08, C08F 2500/12;
C08F 210/16, C08F 210/08, C08F 2500/12, C08F 2500/27;
C08F 210/16, C08F 210/14, C08F 210/08, C08F 2500/05, C08F 2500/12, C08F 2500/27, C08F 2500/26

## Description

The present invention relates to a metallocene catalysed multimodal copolymer (P) of ethylene, to the use of the multimodal copolymer (P) of ethylene in film applications and to a film comprising the polymer composition of the invention.

Unimodal polyethylene (PE) polymers, for instance SSC products, are usually used for film application. Unimodal PE polymers have for instance good optical properties, like low haze, but for instance, the melt processing of such polymers is not satisfactory in production point of view and may cause quality problems of the final product as well. Multimodal PE polymers with two or more different polymer components are better to process, but e.g. melt homogenisation of the multimodal PE may be problematic resulting to inhomogeneous final product evidenced e.g. with high gel content of the final product.

WO 2021/009189, WO 2021/009190 and WO 2021/009191 of Borealis disclose a process for preparing multimodal PE polymers in two loop reactors and one gas phase reactor.

The polymers produced in the Examples have a total density of 938 or 939 kg/m$^3$. The $MFR_2$ (190°C, 2.16 kg, ISO 1133) of the polymer components produced in the first loop is 22 g/10 min. Film properties, like sealing initiation temperature (SIT) are not mentioned at all.

Also WO 2021/009192 discloses such a process. The polymer produced in the Examples has an even higher density of 951 kg/m$^3$. The $MFR_2$ (190°C, 2.16 kg, ISO 1133) of the polymer component produced in the first loop is 32 g/10 min. Film properties, like sealing initiation temperature (SIT) are not mentioned at all.

There is a continuous need to find multimodal PE polymers with different property balances for providing tailored solutions to meet the increasing demands of the end application producers e.g. for reducing the production costs while maintaining or even improving the end product properties. Tailored polymer solutions are also needed to meet the requirements of continuously developing equipment technology in the end application field. Therefore, there is a need in the art for providing a material that provides low sealing initiation temperature, good optical properties and mechanical properties, especially dart drop (impact strength). In other words, a material is desirable that provides an advantageous combination of preferable sealing properties, good optics and mechanical properties, especially SIT, haze and dart drop, to films prepared from such a material.

### Description of the invention

The present invention is therefore directed to a metallocene catalysed multimodal copolymer (P) of ethylene with at least two different comonomers selected from alpha-olefins having from 4 to 10 carbon atoms, which consists of

(i) 30.0 to 70.0 wt% of an ethylene polymer component (A), comprising ethylene polymer fraction (A-1) and ethylene polymer fraction (A-2) and
(ii) 70.0 to 30.0 wt% of an ethylene polymer component (B), whereby the ethylene polymer component (A) has

- a density in the range of from 920 to 950 kg/m$^3$ and an $MFR_2$ (190°C, 2.16 kg, ISO 1133) in the range of from 2.0 to 40.0 g/10 min; the ethylene polymer fraction (A-1) has
- a density in the range of from 920 to 960 kg/m$^3$ and an $MFR_2$ (190°C, 2.16 kg, ISO 1133) in the range of from 1.0 to 50.0 g/10 min; the ethylene polymer fraction (A-2) having
- a density in the range of from 930 to 950 kg/m$^3$ and an $MFR_2$ and (190°C, 2.16 kg, ISO 1133) in the range of from 3.0 to 40.0 g/10 min; and whereby the ratio of the $MFR_2$ of the ethylene polymer fraction (A-1) to the $MFR_2$ of the ethylene polymer component (A) is greater than 0.3;
  the ethylene polymer component (B) has
- a density in the range of from 880 to 915 kg/m$^3$ and an $MFR_2$ (190°C, 2.16 kg, ISO 1133) in the range of from 0.01 to 1.5 g/10 min; and whereby the multimodal copolymer (P) has
- a density in the range of from 905.0 to 916.5 kg/m$^3$ and an $MFR_2$ (190°C, 2.16 kg, ISO 1133) in the range of from 0.5 to 2.5 g/10 min and
- a ratio of the $MFR_2$ of ethylene polymer component (A) to the $MFR_2$ of the multimodal copolymer (P) of greater than 2.1.

Unexpectedly the multimodal copolymer (P) of the invention provides improved sealing properties to films, such as especially low sealing initiation temperature (SIT) in combination with good dart drop strength and low haze.

The invention is therefore further directed to a film comprising at least one layer comprising the multimodal PE.

The film is characterized by a sealing initiation temperature (SIT) measured as described in the experimental part on a 40 $\mu$m monolayer test blown film of below 82°C, preferably in the range of 60 to 80°C.

In an embodiment of the invention the films furthermore have in addition to the low SIT, a dart drop impact

(DDI) determined according to ASTM D1709, method A on a 40 μm monolayer test blown film of at least 650 g up to 1500 g.

*Definitions*

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Metallocene catalysed multimodal copolymer is defined in this invention as multimodal copolymer (P) of ethylene with at least two different comonomers selected from alpha-olefins having from 4 to 10 carbon atoms, which has been produced in the presence of a metallocene catalyst.

Term "multimodal" in context of multimodal copolymer (P) of ethylene means herein multimodality with respect to melt flow rate (MFR) of the ethylene polymer components (A) and (B) as well as ethylene polymer fraction (A-1) and (A-2), i.e. the ethylene polymer components (A) and (B, as well as fractions (A-1) and (A-2) have different MFR values. The multimodal copolymer (P) can have further multimodality with respect to one or more further properties between the ethylene polymer components (A) and (B) as well as between fractions (A-1) and (A-2), as will be described later below.

The multimodal copolymer (P) of the invention as defined above, below or in claims is also referred herein shortly as "multimodal PE".

The ethylene polymer component (A) and the ethylene polymer component (B), when both mentioned, are also be referred as "ethylene polymer component (A) and (B)".

The following preferable embodiments, properties and subgroups of multimodal PE and the ethylene polymer components (A) and (B) thereof, as well as the ethylene polymer fractions (A-1) and (A-2) and the film of the invention including the preferable ranges thereof, are independently generalisable so that they can be used in any order or combination to further define the preferable embodiments of the multimodal PE and the article of the invention.

**Multimodal PE as well as ethylene polymer component (A) and (B) and ethylene polymer fractions (A-1) and (A-2)**

The metallocene catalysed multimodal copolymer (P) is referred herein as "multimodal", since the ethylene polymer component (A), including ethylene polymer fractions (A-1) and (A-2), and ethylene polymer component (B) have been produced under different polymerization conditions resulting in different Melt Flow Rates (MFR, e.g. $MFR_2$). I.e. the multimodal PE is multimodal at least with respect to difference in MFR of the ethylene polymer components (A) and (B) as well as of ethylene polymer fractions (A-1) and (A-2).

As stated above the $MFR_2$ of the ethylene polymer fractions (A-1) and (A-2) are different from each other, i.e. ethylene polymer fractions (A-2) has a higher $MFR_2$ than ethylene polymer fractions (A-1) .

The ethylene polymer fraction (A-1) has a $MFR_2$ in the range of 1.0 to 50.0 g/10 min, preferably of 1.5 to 40.0 g/10 min, more preferably of 2.0 to 30.0 g/10 min and even more preferably of 2.5 to 20.0 g/10 min, like 3.0 to 10.0 g/10 min.

The ethylene polymer fraction (A-2) has a $MFR_2$ higher than the ethylene polymer fraction (A-1), i.e. in the range of 3.0 to 40.0 g/10 min, preferably of 3.2 to 30.0 g/10 min, more preferably of 3.5 to 20.0 g/10 min, like 3.5 to 15.0 g/10 min.

The $MFR_2$ of the ethylene polymer components (A) and (B) are also different from each other.

The ethylene polymer component (A) has a $MFR_2$ in the range of 2.0 to 40 g/10 min, preferably of 2.5 to 30 g/10 min, more preferably of 3.0 to 20 g/10 min and even more preferably of 3.2 to 10 g/10 min.

The ethylene polymer component (B) has a $MFR_2$ in the range of 0.01 to 1.5 g/10 min, preferably of 0.05 to 1.5 g/10 min, more preferably of 0.1 to 1.3 g/10 min and even more preferably of 0.2 to 1.2 g/10 min.

Additionally the ratio of the $MFR_2$ of the ethylene polymer fraction (A-1) to the $MFR_2$ of the ethylene polymer component (A) is greater than 0.3, preferably in a range of 0.50 to 1.0, more preferably in the range of 0.60 to 1.0 and even more preferably 0.70 to 1.0, like 0.80 to 0.98.

Furthermore, the ratio of the $MFR_2$ of ethylene polymer component (A) to the $MFR_2$ of the final multimodal copolymer (P) is greater than 2.1, preferably 2.3 to 12.0, more preferably 2.5 to 10.0 and even more preferably 2.8 to 8.0.

The $MFR_2$ of the multimodal copolymer (P) is in the range of 0.5 to 2.5 g/10 min, preferably 0.8 to 2.3 g/10 min, more preferably 1.0 to 2.2 g/10 min.

In an embodiment of the invention, the multimodal copolymer (P) has a ratio of the $MFR_{21}$ (190°C, 21.6 kg, ISO 1133) to $MFR_2$ (190°C, 2.16 kg, ISO 1133), $MFR_{21}/MFR_2$, in the range of from 10 to 28, preferably from 12 to 26,

more preferably from 15 to 24.

If the $MFR_2$ of ethylene polymer components, e.g. component (B), cannot be measured, because it cannot be isolated from the mixture of ethylene polymer components (A) or (B), then it can be calculated ($MI_2$ below) using so called Hagström equation (Hagström, The Polymer Processing Society, Europe/Africa Region Meeting, Gothenburg, Sweden, August 19-21, 1997):

$$MI_b = \left( w \cdot MI_1^{-\frac{w^{-b}}{a}} + (1-w) \cdot MI_2^{-\frac{w^{-b}}{a}} \right)^{-a \cdot w^b} \qquad (eq.3)$$

According to said Hagström, in said equation (eq.3), a=5.2 and b=0.7 for $MFR_2$. Furthermore, w is the weight fraction of the other ethylene polymer component, e.g. component (A), having higher MFR. The ethylene polymer component (A) can thus be taken as the component 1 and the ethylene polymer component (B) as the component 2. $MI_b$ is the $MFR_2$ of the final polymer of ethylene (1). The $MFR_2$ of the ethylene polymer component (B) ($MI_2$) can then be solved from equation 1 when the $MFR_1$ of the ethylene polymer component (A) ($MI_1$) and the final polymer of ethylene (1) ($MI_b$) are known.

In the same way, the $MFR_2$ for ethylene polymer fraction (A-2) can be calculated from $MFR_2$ (A-1), $MFR_2$ (A) and the corresponding weight ratios.

The ethylene polymer fraction (A-1) can thus be taken as the component 1 and the ethylene polymer fraction (A-2) as the component 2. $MI_b$ is the $MFR_2$ of the ethylene polymer component (A). The $MFR_2$ of the ethylene polymer fraction (A-2) ($MI_2$) can then be solved from equation 1 when the $MFR_2$ of the ethylene polymer fraction (A-1) ($MI_1$) and the ethylene polymer component (A) ($MI_b$) are known.

Naturally, in addition to multimodality with respect to, i.e. difference between, the $MFR_2$ of ethylene polymer components (A) and (B) as well as of ethylene polymer fractions (A-1) and (A-2), the multimodal PE of the invention can also be multimodal e.g. with respect to one or both of the two further properties: multimodality with respect to, i.e. difference between,

- the comonomer type or the comonomer content(s) present in the ethylene polymer components (A) and (B), or both the type and content(s) of comonomers present in the ethylene polymer components (A) and (B), whereby the comonomer type of ethylene polymer fractions (A-1) and (A-2) is the same; and/or
- the density of the ethylene polymer components (A) and (B.

The at least two alpha-olefin comonomers having from 4 to 10 carbon atoms of the multimodal copolymer (P) are preferably 1-butene and 1-hexene.

Preferably, the multimodal copolymer (P) is further multimodal with respect to comonomer type and/or comonomer content (mol%), preferably wherein the alpha-olefin comonomer having from 4 to 10 carbon atoms of ethylene polymer component (A) is different from the alpha-olefin comonomer having from 4 to 10 carbon atoms of ethylene polymer component (B), preferably wherein the alpha-olefin comonomer having from 4 to 10 carbon atoms of ethylene polymer component (A) is 1-butene and the alpha-olefin comonomer having from 4 to 10 carbon atoms of ethylene polymer component (B) is 1-hexene.

The comonomer type for the polymer fractions (A-1) and (A-2) is the same, thus the same alpha-olefin comonomer having from 4 to 10 carbon atoms is used for fraction (A-1) and (A-2), more preferably both fractions therefore have 1-butene as comonomer.

The comonomer content of component (A) and (B) can be measured, or, in case, and preferably, one of the components is produced first and the other thereafter in the presence of the first produced in so called multistage process, then the comonomer content of the first produced component, e.g. component (A), can be measured and the comonomer content of the other component, e.g. component (B), can be calculated according to following formula:

Comonomer content (mol%) in component B = (comonomer content (mol%) in final product – (weight fraction of component A * comonomer content (mol%) in component A)) / (weight fraction of component B)

More preferably, the total amount of comonomers present in the multimodal polymer (P) of ethylene is of 0.5 to 10.0 mol%, preferably of 1.0 to 8.0 mol%, more preferably of 1.5 to 6.0 mol%, more preferably of 2.0 to 5.0 mol%, based on the multimodal polymer (P).

The total amount of 1-butene, based on the multimodal polymer (P) is preferably in the range of from 0.05 to 1.0 mol%, preferably 0.10 to 0.8 mol% and more preferably 0.15 to 0.5 mol%.

The total amount of 1-hexene, based on the multimodal polymer (P) preferably is in the range of 0.45 to 9.0 mol%, preferably 0.90 to 7.2 mol% and more preferably 1.35 to 5.5 mol%.

Preferably, the total amount (mol%) of alpha-olefin comonomer having from 4 to 10 carbon atoms, preferably selected from 1-butene, 1-hexene and 1-octene, especially 1-butene, present in the ethylene polymer component (A) is of 0.05 to 5.0 mol%, more preferably of 0.1 to 4.0 mol%, even more preferably of 0.2 to 3.0 mol%, even more preferably of 0.3 to 2.0 mol%, like 0.3 to 1.0 mol%, based on the ethylene polymer component (A).

In an embodiment, the amount (mol%) of alpha-olefin comonomer having from 6 to 10 carbon atoms, preferably selected from 1-hexene and 1-octene, especially 1-hexene, present in the ethylene polymer component (B) is of 2.5 to 10.0 mol%, preferably of 3.0 to 9.0 mol%, more preferably of 3.5 to 8.0 mol%, even more preferably of 4.0 to 7.0 mol%, based on the ethylene polymer component (B).

Even more preferably the multimodal polymer of ethylene of the invention is further multimodal with respect to difference in density between the ethylene polymer component (A) and ethylene polymer component (B). Preferably, the density of ethylene polymer component (A) is different, preferably higher, than the density of the ethylene polymer component (B).

The density of the ethylene polymer component (A) is in the range of 920 to 950 $kg/m^3$, preferably of 925 to 950 $kg/m^3$, more preferably 930 to 945 $kg/m^3$ and/or the density of the ethylene polymer component (B) is of in the range of 880 to 915 $kg/m^3$, preferably of 890 to 905 $kg/m^3$.

The polymer fraction (A-1) has a density in the range of from 920 to 960 $kg/m^3$, preferably of 925 to 955 $kg/m^3$, more preferably of 930 to 950 $kg/m^3$, like 935 to 945 $kg/m^3$.

The density of the polymer fraction (A-2) is in the range of from 930 to 950 $kg/m^3$, preferably of 935 to 945 $kg/m^3$.

The metallocene catalysed multimodal copolymer (P) is preferably a linear low density polyethylene (LLDPE) which has a well known meaning.

The density of the multimodal copolymer (P) is in the range of 905.0 to 916.5 $kg/m^3$, preferably of 908.0 to 916.5 $kg/m^3$, more preferably of 910.0 to 916.0 $kg/m^3$ and even more preferably of 912.0 to 916 $kg/m^3$.

More preferably the multimodal copolymer (P) is multimodal at least with respect to, i.e. has a difference between, the $MFR_2$, the comonomer type and the comonomer content (mol%), as well as with respect to, i.e. has a difference between, the density of the ethylene polymer components, respectively fractions, (A), (A-1), (A-2) and (B), as defined above, below or in the claims including any of the preferable ranges or embodiments of the polymer composition.

It is within the scope of the invention, that the first and the second ethylene polymer fraction (A-1 and A-2) of the ethylene polymer component (A) are present in a weight ratio of 4:1 up to 1:4, such as 3:1 to 1:3, or 2:1 to 1:2, or 1:1.

The ethylene polymer component (A) is present in an amount of 30.0 to 70.0 wt% based on the multimodal copolymer (P), preferably in an amount of 32.0 to 55.0 wt% and even more preferably in an amount of 34.0 to 45.0 wt%.

Thus, the ethylene polymer component (B) is present in an amount of 70.0 to 30.0 wt% based on the multimodal copolymer (P), preferably in an amount of 68.0 to 45.0 wt% and more preferably in an amount of 66.0 to 55.0 wt%.

The metallocene catalysed multimodal copolymer (P), can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). The loop reactor 2 is thereby connected in series to a gas phase reactor (GPR), so that the first ethylene polymer component (A) leaving the second slurry reactor is fed to the GPR to produce a trimodal polyethylene copolymer. In this case, the reaction conditions in the two slurry reactors are chosen in a way that in the two slurry reactors different products in view of MFR and/or density are produced.

Such a process is described inter alia in WO 2016/198273, WO 2021009189, WO 2021009190, WO 2021009191 and WO 2021009192. Full details of how to prepare suitable metallocene catalysed multimodal copolymer (P) can be found in these references.

A suitable process is the Borstar PE 3G process.

The metallocene catalysed multimodal copolymer (P) according to the present invention is therefore preferably produced in a loop loop gas cascade. Such polymerization steps may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry and the amount of polymer produced in an optional prepolymerization step is counted to the amount (wt%) of ethylene polymer component (A).

The catalyst components are preferably all introduced to the prepolymerization step when a prepolymerization step is present. However, where the solid catalyst component and the cocatalyst can be fed separately it is possible

that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount or polymer produced in the prepolymerization lies within 1 to 5 wt% in respect to the final metallocene catalysed multimodal copolymer (P). This can counted as part of the first ethylene polymer component (A).

*Catalyst*

The metallocene catalysed multimodal copolymer (P) used in the process of the invention is one made using a metallocene catalyst. A metallocene catalyst comprises a metallocene complex and a cocatalyst. It is preferred if the metallocene complex comprises an element of a group (IV) metal coordinated to at least one, preferably at least two cyclopentadienyl type ligands.

The cyclopentadienyl type group ligand has been widely described in the scientific and patent literature for about twenty years. Essentially any ligand containing the general structure:

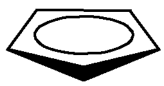

can be employed herein.

The cyclopentadienyl type ligand can be an unsubstituted or substituted and/or fused cyclopentadienyl ligand, e.g. substituted or unsubstituted cyclopentadienyl, substituted or unsubstituted indenyl, substituted or unsubstituted tetrahydroindenyl or substituted or unsubstituted fluorenyl ligand.

Suitable ligands therefore include:

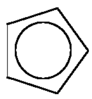
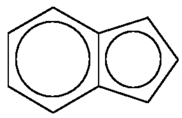

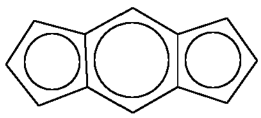
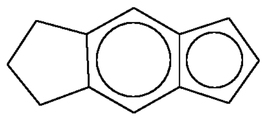

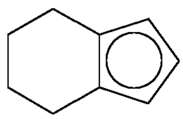

which can obviously be substituted. The metallocene complex preferably does not comprise a single cyclopentadienyl type ligand. Preferably, two such cyclopentadienyl type ligands are present, optionally joined by a bridging group. The substitution pattern on the two ligands may be the same or different. Metallocene complexes of use in this invention can therefore be symmetrical or asymmetrical.

The two cyclopentadienyl ligands of the present invention can be bridged or unbridged as is well known in the art. It is generally envisaged that the principles of this invention can be applied to any bis-cyclopentadienyl type ligand system.

The metallocene complex will comprise at least one metal ion of group (IV) as is well known. This will be η-bonded to the cyclopentadienyl type rings. Such η-bonded metals are typically Zr, Hf or Ti, especially Zr or Hf.

In a preferred embodiment, the metallocene complex is a compound of formula (I)

$$(Cp)_2R_nMX_2 \qquad (I)$$

wherein:

each Cp independently is an unsubstituted or substituted and/or fused cyclopentadienyl ligand, e.g. substituted or

unsubstituted cyclopentadienyl, substituted or unsubstituted indenyl or substituted or unsubstituted fluorenyl ligand;
R is a bridge of 1-7 atoms, e.g. 1 to 2 atoms;
X is a sigma ligand;
n is 0 or 1;
M is a transition metal of Group 4, e.g. Ti, Zr or Hf, especially Zr or Hf.
In a preferred embodiment, the metallocene complex is a compound of formula (I)

$$(Cp)_2R_nMX_2 \qquad (I)$$

wherein:
each Cp independently is an unsubstituted or substituted and/or fused cyclopentadienyl ligand, e.g. substituted or unsubstituted cyclopentadienyl, substituted or unsubstituted indenyl or substituted or unsubstituted fluorenyl ligand;
the optional one or more substituent(s) being independently selected preferably from halogen, hydrocarbyl (e.g. $C_1$-$C_{20}$-alkyl, $C_2$-$C_{20}$-alkenyl, $C_2$-$C_{20}$-alkynyl, $C_3$-$C_{12}$-cycloalkyl, $C_6$-$C_{20}$-aryl or $C_7$-$C_{20}$-arylalkyl), $C_3$-$C_{12}$-cycloalkyl which contains 1, 2, 3 or 4 heteroatom(s) in the ring moiety, $C_6$-$C_{20}$-heteroaryl, $C_1$-$C_{20}$-haloalkyl, -SiR"$_3$, -OSiR"$_3$, -SR", -PR"$_2$, OR" or -NR"$_2$,
each R" is independently a hydrogen or hydrocarbyl, e.g. $C_1$-$C_{20}$-alkyl, $C_2$-$C_{20}$-alkenyl, $C_2$-$C_{20}$-alkynyl, $C_3$-$C_{12}$-cycloalkyl or $C_6$-$C_{20}$-aryl; or e.g. in case of -NR"$_2$, the two substituents R" can form a ring, e.g. five- or six-membered ring, together with the nitrogen atom to which they are attached;
R is a bridge of 1-7 atoms, e.g. a bridge of 1-4 C-atoms and 0-4 heteroatoms, wherein the heteroatom(s) can be e.g. Si, Ge and/or O atom(s), wherein each of the bridge atoms may bear independently substituents, such as $C_1$-$C_{20}$-alkyl, tri($C_1$-$C_{20}$-alkyl)silyl, tri($C_1$-$C_{20}$-alkyl)siloxy or $C_6$-$C_{20}$-aryl substituents); or a bridge of 1-3, e.g. one or two, hetero atoms, such as silicon, germanium and/or oxygen atom(s), e.g. -$SiR^2_2$-, wherein each $R^2$ is independently $C_1$-$C_{20}$-alkyl, $C_{3-12}$-cycloalkyl, $C_6$-$C_{20}$-aryl or tri($C_1$-$C_{20}$-alkyl)silyl- residue, such as trimethylsilyl;
M is a transition metal of Group 4, e.g. Ti, Zr or Hf, especially Zr or Hf;
each X is independently a sigma-ligand, such as H, halogen, $C_1$-$C_{20}$-alkyl, $C_1$-$C_{20}$-alkoxy, $C_2$-$C_{20}$-alkenyl, $C_2$-$C_{20}$-alkynyl, $C_3$-$C_{12}$-cycloalkyl, $C_6$-$C_{20}$-aryl, $C_6$-$C_{20}$-aryloxy, $C_7$-$C_{20}$-arylalkyl, $C_7$-$C_{20}$-arylalkenyl, -SR", -PR"$_3$, -SiR"$_3$, -OSiR"$_3$, -NR"$_2$ or -$CH_2$-Y, wherein Y is $C_6$-$C_{20}$-aryl, $C_6$-$C_{20}$-heteroaryl, $C_1$-$C_{20}$-alkoxy, $C_6$-$C_{20}$-aryloxy, NR"$_2$, -SR", -PR"$_3$, -SiR"$_3$, or-OSiR"$_3$;
each of the above mentioned ring moieties alone or as a part of another moiety as the substituent for Cp, X, R" or $R^2$ can further be substituted e.g. with $C_1$-$C_{20}$-alkyl which may contain Si and/or O atoms;
n is 0 or 1.

Suitably, in each X as -$CH_2$-Y, each Y is independently selected from $C_6$-$C_{20}$-aryl, NR"$_2$, - SiR"$_3$ or -OSiR"$_3$. Most preferably, X as -$CH_2$-Y is benzyl. Each X other than -$CH_2$-Y is independently halogen, $C_1$-$C_{20}$-alkyl, $C_1$-$C_{20}$-alkoxy, $C_6$-$C_{20}$-aryl, $C_7$-$C_{20}$-arylalkenyl or -NR"$_2$ as defined above, e.g. -N($C_1$-$C_{20}$-alkyl)$_2$.
Preferably, each X is halogen, methyl, phenyl or -$CH_2$-Y, and each Y is independently as defined above.
Cp is preferably cyclopentadienyl, indenyl, tetrahydroindenyl or fluorenyl, optionally substituted as defined above. More preferably Cp is a cyclopentadienyl or indenyl.
In a suitable subgroup of the compounds of formula (I), each Cp independently bears 1, 2, 3 or 4 substituents as defined above, preferably 1, 2 or 3, such as 1 or 2 substituents, which are preferably selected from $C_1$-$C_{20}$-alkyl, $C_6$-$C_{20}$-aryl, $C_7$-$C_{20}$-arylalkyl (wherein the aryl ring alone or as a part of a further moiety may further be substituted as indicated above), - OSiR"$_3$, wherein R" is as indicated above, preferably $C_1$-$C_{20}$-alkyl.
R, if present, is preferably a methylene, ethylene or a silyl bridge, whereby the silyl can be substituted as defined above, e.g. a (dimethyl)Si=, (methylphenyl)Si=, (methylcyclohexyl)silyl= or (trimethylsilylmethyl)Si=;
n is 0 or 1.
Preferably, R" is other than hydrogen.
A specific subgroup includes the well known metallocenes of Zr, Hf and Ti with two eta5-ligands which may be bridged or unbridged cyclopentadienyl ligands optionally substituted with e.g. siloxy, or alkyl (e.g. C1-6-alkyl) as defined above, or with two unbridged or bridged indenyl ligands optionally substituted in any of the ring moieties with e.g. siloxy or alkyl as defined above, e.g. at 2-, 3-, 4- and/or 7-positions. Preferred bridges are ethylene or -$SiMe_2$. The preparation of the metallocenes can be carried out according or analogously to the methods known from the literature and is within skills of a person skilled in the field. Thus for the preparation see e.g. EP-A-129 368, examples of compounds wherein the metal atom bears a -NR"$_2$ ligand see i.a. in WO-A-9856831 and WO-A-0034341. For the preparation see also e.g. in EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130.
To form a catalyst, a cocatalyst is used as is well known in the art. Cocatalysts comprising Al or B are well known and can be used here. The use of aluminoxanes (e.g. MAO) or boron based cocatalysts (such as borates) is

preferred.

Polyethylene copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

The metallocene catalysed multimodal copolymer (P) may contain further polymer components and optionally additives and/or fillers. In case the metallocene catalysed multimodal copolymer (P) contains further polymer components, then the amount of the further polymer component(s) typically varies between 3.0 to 20.0 wt% based on the combined amount of the metallocene catalysed multimodal copolymer (P) and the other polymer component(s).

The optional additives and fillers and the used amounts thereof are conventional in the field of film applications. Examples of such additives are, among others, antioxidants, process stabilizers, UV-stabilizers, pigments, fillers, antistatic additives, antiblock agents, nucleating agents, acid scavengers as well as polymer processing agent (PPA).

It is understood herein that any of the additives and/or fillers can optionally be added in socalled master batch, which comprises the respective additive(s) together with a carrier polymer. In such case the carrier polymer is not calculated to the polymer components of the metallocene catalysed multimodal copolymer (P), but to the amount of the respective additive(s), based on the total amount of polymer composition (100wt%).

**Film of the invention**

The film of the invention comprises at least one layer comprising the metallocene catalysed multimodal copolymer (P). The film can be a monolayer film comprising the metallocene catalysed multimodal copolymer (P) or a multilayer film, wherein at least one layer comprises the metallocene catalysed multimodal copolymer (P). The terms "monolayer film" and multilayer film" have well known meanings in the art.

The layer of the monolayer or multilayer film of the invention may consist of the metallocene catalysed multimodal copolymer (P) as such or of a blend of the metallocene catalysed multimodal copolymer (P) together with further polymer(s). In case of blends, any further polymer is different from the metallocene catalysed multimodal copolymer (P) and is preferably a polyolefin. Part of the above mentioned additives, like processing aids, can optionally added to the metallocene catalysed multimodal copolymer (P) during the film preparation process.

Preferably, the at least one layer of the invention comprises at least 50 wt%, more preferably at least 60 wt%, even more preferably at least 70 wt%, yet more preferably at least 80 wt%, of the metallocene catalysed multimodal copolymer (P) of the invention. Most preferably said at least one layer of the film of invention consists of the metallocene catalysed multimodal copolymer (P).

Accordingly, the films of the present invention may comprise a single layer (i.e. monolayer) or may be multilayered. Multilayer films typically, and preferably, comprise at least 3 layers.

The films are preferably produced by any conventional film extrusion procedure known in the art including cast film and blown film extrusion. Most preferably, the film is a blown or cast film, especially a blown film. E.g. the blown film is produced by extrusion through an annular die and blowing into a tubular film by forming a bubble which is collapsed between nip rollers after solidification. This film can then be slit, cut or converted (e.g. gusseted) as desired. Conventional film production techniques may be used in this regard. If the preferable blown or cast film is a multilayer film then the various layers are typically coextruded. The skilled man will be aware of suitable extrusion conditions.

Films according to the present invention may be subjected to post-treatment processes, e.g. surface modifications, lamination or orientation processes or the like. Such orientation processes can be mono-axially (MDO) or biaxially orientation, wherein mono-axial orientation is preferred.

In another preferred embodiment, the films are unoriented.

The resulting films may have any thickness conventional in the art. The thickness of the film is not critical and depends on the end use. Thus, films may have a thickness of, for example, 300 $\mu$m or less, typically 6 to 200 $\mu$m, preferably 10 to 180 $\mu$m, e.g. 20 to 150 $\mu$m or 20 to 120 $\mu$m. If desired, the polymer of the invention enables thicknesses of less than 100 $\mu$m, e.g. less than 50 $\mu$m. Films of the invention with thickness even less than 20 $\mu$m can also be produced whilst maintaining good mechanical properties.

Furthermore, the present invention is also directed to the use of the inventive article as packing material, in particular as a packing material for food and/or medical products.

The films of the invention are characterized by a sealing initiation temperature determined as described in the experimental part on a blown film with a thickness of 40 $\mu$m of below 82°C, preferably in the range of 60 to 80°C, more preferably in the range of 65°C to 78°C, like 68°C to 78°C.

In an embodiment, the films comprising the metallocene catalysed multimodal copolymer (P) are additionally characterized by a dart-drop impact strength (DDI) determined according to ASTM D1709, method A on a 40 $\mu$m monolayer test blown film of at least 650 g up to 1500 g , preferably 680 g to 1300 g and more preferably 700 g to 1200 g.

In another embodiment, the films comprising the metallocene catalysed multimodal copolymer (P) may have

a haze (measured on a 40 μm monolayer test blown film according to ASTM D 1003-00) of below 25 %, preferably between 2 % and 22 %, more preferable between 5 % and 20 %.

Thus, in a preferred embodiment, the films comprising the metallocene catalysed multimodal copolymer (P) are characterized by having at least

a) a sealing initiation temperature determined as described in the experimental part on a blown film with a thickness of 40 μm of below 82°C, preferably in the range of 60 to 80°C, more preferably in the range of 65°C to 78°C, like 68°C to 78°C, and one or both of the following properties b) and c)

b) a dart-drop impact strength (DDI) determined according to ASTM D1709, method A on a 40 μm monolayer test blown film of at least 650 g up to 1500 g , preferably 680 g to 1300 g and more preferably 700 g to 1200 g,

c) a haze (measured on a 40 μm monolayer test blown film according to ASTM D 1003-00) of below 25 %, preferably between 2 % and 22 %, more preferable between 5 % and 20 %.

The invention will be further described with reference to the following non-limiting examples.

**Determination methods**

Unless otherwise stated in the description or in the experimental part, the following methods were used for the property determinations of the polymers (including its fractions and components) and/or any sample preparations thereof as specified in the text or experimental part.

**Melt Flow Rate**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene. MFR may be determined at different loadings such as 2.16 kg ($MFR_2$), 5 kg ($MFR_5$) or 21.6 kg ($MFR_{21}$).

**Density**

Density of the polymer was measured according to ASTM; D792, Method B (density by balance at 23°C) on compression moulded specimen prepared according to EN ISO 1872-2 (February 2007) and is given in kg/m$^3$.

**Comonomer contents:**

**Quantification of microstructure by NMR spectroscopy**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.{klimke06, parkinson07, castignolles09} Standard single-pulse excitation was employed utilising the NOE at short recycle delays{pollard04, klimke06} and the RS-HEPT decoupling scheme{fillip05,griffin07}. A total of 1024 (1k) transients were acquired per spectra.

Quantitative $^{13}C\{^1H\}$ NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way.

Characteristic signals corresponding to the incorporation of 1-butene were observed and the comonomer fraction calculated as the fraction of 1-butene in the polymer with respect to all monomer in the polymer:

$$fBtotal = (Btotal / (Etotal + Btotal + Htotal)$$

The amount isolated 1-butene incorporated in EEBEE sequences was quantified using the integral of the *B2 sites at 38.3 ppm accounting for the number of reporting sites per comonomer:

$$B = I_{*B2}$$

The amount consecutively incorporated 1-butene in EEBBEE sequences was quantified using the integral of the ααB2B2 site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the ββB2B2 site at 24.7 ppm accounting for the number of reporting sites per comonomer:

$$BEB = 2 * I\beta\beta B2B2$$

Due to the overlap of the *B2 and *βB2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = (Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = (Htotal / (Etotal + Btotal + Htotal)$$

The amount isolated 1-hexene incorporated in EEHEE sequences was quantified using the integral of the *B4 sites at 39.9 ppm accounting for the number of reporting sites per comonomer:

$$H = I_{*B4}$$

The amount consecutively incorporated 1-hexene in EEHHEE sequences was quantified using the integral of the ααB4B4 site at 40.5 ppm accounting for the number of reporting sites per comonomer:

$$HH = 2 * I\alpha\alpha B4B4$$

The amount non consecutively incorporated 1-hexene in EEHEHEE sequences was quantified using the integral of the ββB4B4 site at 24.7 ppm accounting for the number of reporting sites per comonomer:

$$HEH = 2 * I\beta\beta B4B4$$

The total mole fraction of 1-hexene in the polymer was then calculated as:

$$fH = (Htotal / (Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H [wt\%] = 100 * ( fH * 84.16 ) / ( (fB * 56.11) + (fH * 84.16) + ((1-(fB + fH)) * 28.05) )$$

References:

Klimke, K., Parkinson, M., Piel, C., Kaminsky, W., Spiess, H.W., Wilhelm, M., Macromol. Chem. Phys. 2006;207:382.
Parkinson, M., Klimke, K., Spiess, H.W., Wilhelm, M., Macromol. Chem. Phys. 2007;208:2128.
Pollard, M., Klimke, K., Graf, R., Spiess, H.W., Wilhelm, M., Sperber, O., Piel, C., Kaminsky, W., Macromolecules 2004;37:813.
Filip, X., Tripon, C., Filip, C., J. Mag. Resn. 2005, 176, 239
Griffin, J.M., Tripon, C., Samoson, A., Filip, C., and Brown, S.P., Mag. Res. in Chem. 2007 45, S1, S198
Castignolles, P., Graf, R., Parkinson, M., Wilhelm, M., Gaborieau, M., Polymer 50 (2009) 2373
Busico, V., Cipullo, R., Prog. Polym. Sci. 26 (2001) 443
Busico, V., Cipullo, R., Monaco, G., Vacatello, M., Segre, A.L., Macromoleucles 30 (1997) 6251
Zhou, Z., Kuemmerle, R., Qiu, X., Redwine, D., Cong, R., Taha, A., Baugh, D. Winniford, B., J. Mag. Reson. 187 (2007) 225
Busico, V., Carbonniere, P., Cipullo, R., Pellecchia, R., Severn, J., Talarico, G., Macromol. Rapid Commun. 2007, 28, 1128
Resconi, L., Cavallo, L., Fait, A., Piemontesi, F., Chem. Rev. 2000, 100, 1253


**Haze**

Haze was determined according to ASTM D 1003-00 on films as produced indicated below.

**Sealing initiation temperature (SIT); sealing end temperature (SET), sealing range:**

The method determines the sealing temperature range (sealing range) of polyethylene films, in particular blown films or cast films. The sealing temperature range is the temperature range, in which the films can be sealed according to conditions given below. The lower limit (heat sealing initiation temperature (SIT)) is the sealing temperature at which a sealing strength of > 5 N is achieved. The upper limit (sealing end temperature (SET)) is reached, when the films stick to the sealing device.

The sealing range was determined on a J&B Universal Sealing Machine Type 4000 with a blown film of 40 μm thickness with the following further parameters:

Specimen width: 25.4 mm
Seal Pressure: 0.1 N/mm2
Seal Time: 0.1 sec
Cool time: 99 sec
Peel Speed: 10 mm/sec
Start temperature: 80 °C
End temperature: burn through
Increments: 5 °C

**Dart drop strength (DDI)**

Dart-drop was measured using ASTM D1709, method A (Alternative Testing Technique) from the films as produced indicated below. A dart with a 38 mm diameter hemispherical head was dropped from a height of 0.66 m onto a multilayer film clamped over a hole. Successive sets of twenty specimens were tested. One weight was used for each set and the weight was increased (or decreased) from set to set by uniform increments. The weight resulting in failure of 50 % of the specimens was calculated and reported.

**Film sample preparation**

The test films consisting of the inventive multimodal copolymer (P) and respective comparative polymers of 40 μm thickness, were prepared using a Collin 30 lab scale mono layer blown film line. The film samples were produced at 194°C, a 1:2.5 blow-up ratio, frostline distance of 120 mm.

**Experimental part**

**Preparation of examples**

**Cat.Example: Catalyst preparation**

130 grams of a metallocene complex bis(1-methyl-3-n-butylcyclopentadienyl) zirconium (IV) dichloride (CAS no. 151840-68-5), and 9.67 kg of a 30% solution of commercial methylalumoxane (MAO) in toluene were combined and 3.18 kg dry, purified toluene was added. The thus obtained complex solution was added onto 17 kg silica carrier Sylopol 55 SJ (supplied by Grace) by very slow uniform spraying over 2 hours. The temperature was kept below 30°C. The mixture was allowed to react for 3 hours after complex addition at 30°C.

**Polymerization: Inventive Examples: Inventive multimodal copolymer (P) of ethylene with 1-butene and 1-hexene comonomers**

Borstar pilot plant with a 3-reactor set-up (loop1 - loop2 - GPR 1) and a prepolymerization loop reactor.

The inventive multimodal copolymers (P) of example 1 to example 4 (IE1, IE2, IE3 and IE4) as well as of the comparative examples (CE1 to CE2) were produced by using the polymerization conditions as given in table 1.

Table 1: Polymerization conditions

| | IE1 | IE2 | IE3 | IE4 | CE1 | CE2 |
|---|---|---|---|---|---|---|
| **Prepoly reactor** | | | | | | |
| Catalyst feed (g/h) | 29.0 | 29.5 | 29.4 | 30.2 | 17.0 | 26.7 |
| Temp. (°C) | 50.0 | 50.0 | 50.0 | 50.0 | 50.0 | 50.0 |
| Press. (kPa) | 5718.9 | 5702.4 | 5687.0 | 5705.9 | 5692.4 | 5689.4 |
| C2 (kg/h) | 4.0 | 4.0 | 4.0 | 4.0 | 4.0 | 4.0 |
| C4 (g/h) | 0.0 | 0.0 | 0.0 | 0.0 | 0.0 | 0.0 |
| H2 (g/h) | 168.4 | 169.8 | 166.1 | 168.6 | 176.3 | 178.5 |
| Split (wt%) | 2.7 | 2.8 | 2.8 | 2.8 | 2.7 | 2.9 |
| **loop 1** | | | | | | |
| Temp. (°C) | 85.0 | 85.0 | 85.0 | 85.0 | 85.0 | 85.0 |
| Press. (kPa) | 5557.6 | 5556.3 | 5553.6 | 5546.0 | 5525.5 | 5541.5 |
| C2 conc. (mol%) | 3.1 | 3.3 | 3.1 | 2.9 | 3.5 | 3.8 |
| H2/C2 ratio (mol/kmol) | 0.2 | 0.2 | 0.2 | 0.2 | 0.1 | 0.1 |
| C4/C2 ratio (mol/kmol) | 85.4 | 75.9 | 77.6 | 89.6 | 33.6 | 47.3 |
| Split (wt%) | 17.2 | 17.9 | 17.5 | 18.0 | 15.6 | 19.7 |
| Density (kg/m$^3$) of loop 1 material (fraction (A-1)) | 938 | 940.5 | 940 | 938 | 940 | 935.0 |
| $MFR_2$ (g/10 min) of loop 1 material (fraction (A-1)) | 3.2 | 7.1 | 6.2 | 3.1 | 0.8 | 0.5 |
| **loop 2** | | | | | | |
| Temp. (°C) | 85.0 | 85.0 | 85.0 | 85.0 | 85.0 | 85.0 |
| Press. (kPa) | 5365.5 | 5366.3 | 5360.8 | 5355.7 | 5333.4 | 5351.6 |
| C2 conc. (mol%) | 3.1 | 3.2 | 3.1 | 2.8 | 2.7 | 3.4 |
| H2/C2 ratio (mol/kmol) | 0.1 | 0.1 | 0.1 | 0.1 | 0.3 | 0.0 |
| C4/C2 ratio (mol/kmol) | 88.4 | 83.7 | 85.5 | 96.3 | 201.5 | 92.5 |
| Split (wt%) | 19.2 | 20.3 | 19.8 | 20.2 | 18.9 | 19.3 |
| Density (kg/m3) after loop 2 (Component (A)) | 938.5 | 941.4 | 940.9 | 938.0 | 942.0 | 935.6 |
| $MFR_2$ (g/10 min) after loop 2 (Component (A)) | 3.5 | 8.4 | 7.3 | 3.6 | 6.3 | 1.1 |
| $MFR_2$ (g/10 min) of loop 2 material (fraction (A-2)) | 3.7 | 10 | 8.6 | 4.2 | 45 | 2.8 |
| Density (kg/m$^3$) of loop 2 material (fraction (A-2)) | 939 | 942 | 942 | 938 | 944 | 936 |
| C4 (mol%) after loop 2 material (Component (A)) | 0.5 | 0.5 | 0.5 | 0.5 | 0.5 | 0.5 |
| **GPR** | | | | | | |
| Temp. (°C) | 75.0 | 75.0 | 75.0 | 75.0 | 75.0 | 75.0 |
| Press. (kPa) | 2000 | 2000 | 2000 | 2000 | 2000 | 2000 |
| H2/C2 ratio (mol/kmol) | 0.2 | 0.2 | 0.3 | 0.2 | 0.2 | 0.2 |
| C6/C2 ratio (mol/kmol) | 36.2 | 39.8 | 37.9 | 33.7 | 30.3 | 28.2 |
| Split (wt%) | 61.0 | 59.0 | 60.0 | 59.0 | 62.8 | 58.1 |

| | | | | | | |
|---|---|---|---|---|---|---|
| MFR2 (g/10 min) of GPR material (Component (B)) | 0.6 | 0.3 | 0.4 | 1.1 | 0.3 | 0.9 |
| Density (kg/m$^3$) of GPR material (Component (B)) | 899 | 896 | 898 | 901 | 902 | 902 |
| C6 (mol%) of GPR material (Component (B)) | 5.4 | 5.8 | 5.5 | 5.6 | 4.6 | 4.7 |

The polymers were mixed with 2400 ppm of Irganox B561. 270 ppm of Dynamar FX 5922 compounded and extruded under nitrogen atmosphere to pellets by using a JSW extruder so that the SEI was 230 kWh/kg and the melt temperature 250°C.

Table 2: Material properties of inventive multimodal copolymer (P) and comparative copolymers. as well as film parameters

| **Material** | **IE1** | **IE2** | **IE3** | **IE4** | **CE1** | **CE2** |
|---|---|---|---|---|---|---|
| $MFR_2$ (g/10 min) (final) | 1.2 | 1.5 | 2.1 | 1.5 | 1.0 | 1.0 |
| $MFR_{21}$ (g/10 min) | 22.9 | 32.5 | 44.8 | 27.3 | 19.8 | 17.8 |
| $MFR_{21}/MFR_2$ | 19.1 | 21.7 | 21.3 | 18.2 | 19.8 | 17.8 |
| Density (kg/m$^3$) | 915 | 914.5 | 915 | 916 | 917 | 918 |
| C4 (mol%) | 0.2 | 0.2 | 0.2 | 0.2 | 0.2 | 0.2 |
| C6 (mol%) | 3.3 | 3.4 | 3.3 | 3.3 | 2.9 | 2.7 |
| $MFR_2$(A)/$MFR_2$(final) | 3.1 | 6.4 | 4.0 | 2.6 | 6.36 | 1.1 |
| $MFR_2$(A-1)/$MFR_2$(A) | 0.92 | 0.84 | 0.85 | 0.87 | 0.13 | 0.45 |
| Film Properties | | | | | | |
| SIT | 70 | 71 | 73 | 78 | 88 | 84 |
| DDI [g] | 1090 | 1110 | 712 | 890 | 1100 | 510 |
| Haze [%] | 8.8 | 13.6 | 19.3 | 15.1 | 13.5 | 8.4 |

From the above table it can be clearly seen, that films consisting of the inventive multimodal copolymer (P) show an improved, i.e. lower sealing initiation temperature (SIT) compared to the comparative examples.

Furthermore, such films have an improved overall performance, i.e. comparable haze and DDI than comparative examples, but improved sealing parameters.

## Claims

1. A metallocene catalysed multimodal copolymer (P) of ethylene with at least two different comonomers selected from alpha-olefins having from 4 to 10 carbon atoms, which consists of

   (i) 30.0 to 70.0 wt%, based on the metallocene catalysed multimodal copolymer (P), of an ethylene polymer component (A), comprising ethylene polymer fraction (A-1) and ethylene polymer fraction (A-2) and
   (ii) 70.0 to 30.0 wt%, based on the metallocene catalysed multimodal copolymer (P), of an ethylene polymer component (B),
   whereby the ethylene polymer component (A) has

   • a density in the range of from 920 to 950 kg/m$^3$ and an $MFR_2$ (190°C, 2.16 kg, ISO 1133) in the range of from 2.0 to 40.0 g/10 min;

   the ethylene polymer fraction (A-1) has

- a density in the range of from 920 to 960 kg/$m^3$ and an $MFR_2$ (190°C, 2.16 kg, ISO 1133) in the range of from 1.0 to 50.0 g/10 min;

the ethylene polymer fraction (A-2) having

- a density in the range of from 930 to 950 kg/$m^3$ and an $MFR_2$ and (190°C, 2.16 kg, ISO 1133) in the range of from 3.0 to 40.0 g/10 min; and

whereby the ratio of the $MFR_2$ of the ethylene polymer fraction (A-1) to the $MFR_2$ of the ethylene polymer component (A) is greater than 0.3;
the ethylene polymer component (B) has

- a density in the range of from 880 to 915 kg/$m^3$ and an $MFR_2$ (190°C, 2.16 kg, ISO 1133) in the range of from 0.01 to 1.5 g/10 min; and

whereby the multimodal copolymer (P) has

- a density in the range of from 905.0 to 916.5 kg/$m^3$ and an $MFR_2$ (190°C, 2.16 kg, ISO 1133) in the range of from 0.5 to 2.5 g/10 min and
- a ratio of the $MFR_2$ of ethylene polymer component (A) to the $MFR_2$ of the multimodal copolymer (P) of greater than 2.1.

**2.** The metallocene catalysed multimodal copolymer (P) according to claim 1, wherein

the ethylene polymer fraction (A-1) preferably has a $MFR_2$ of 1.5 to 40.0 g/10 min, more preferably of 2.0 to 30.0 g/10 min and even more preferably of 2.5 to 20.0 g/10 min; and/or the ethylene polymer fraction (A-2) preferably has a $MFR_2$ of 3.2 to 30.0 g/10 min, more preferably of 3.5 to 20.0 g/10 min; and/or
the ethylene polymer component (A) preferably has a $MFR_2$ of 2.5 to 30 g/10 min, more preferably of 3.0 to 20 g/10 min and even more preferably of 3.2 to 10 g/10 min and/or the ethylene polymer component (B) preferably has a $MFR_2$ of 0.05 to 1.5 g/10 min, more preferably of 0.1 to 1.3 g/10 min and even more preferably of 0.2 to 1.2 g/10 min.

**3.** The metallocene catalysed multimodal copolymer (P) according to any of the preceding claims 1 or 2, wherein the ratio of the $MFR_2$ of the ethylene polymer fraction (A-1) to the $MFR_2$ of the ethylene polymer component (A) preferably is in a range of 0.50 to 1.0, more preferably in the range of 0.60 to 1.0 and even more preferably 0.70 to 1.0.

**4.** The metallocene catalysed multimodal copolymer (P) according to any of the preceding claims 1 to 3, wherein the ratio of the $MFR_2$ of ethylene polymer component (A) to the $MFR_2$ of the final metallocene catalysed multimodal copolymer (P) is of preferably 2.3 to 12.0, more preferably 2.5 to 10.0 and even more preferably 2.8 to 8.0.

**5.** The metallocene catalysed multimodal copolymer (P) according to any of the preceding claims, wherein the $MFR_2$ of the multimodal copolymer (P) preferably is in the range of 0.8 to 2.3 g/10 min, more preferably 1.0 to 2.2 g/10 min.

**6.** The metallocene catalysed multimodal copolymer (P) according to any of the preceding claims, wherein the ratio of the $MFR_{21}$ (190°C, 21.6 kg, ISO 1133) to $MFR_2$ (190°C, 2.16 kg, ISO 1133), $MFR_{21}/MFR_2$, is in the range of from 10 to 28, preferably from 12 to 26, more preferably from 15 to 24.

**7.** The metallocene catalysed multimodal copolymer (P) according to any of the preceding claims, wherein

the ethylene polymer fraction (A-1) preferably has a density in the range of from 925 kg/$m^3$ to 955 kg/$m^3$, more preferably from 930 kg/$m^3$ to 950 kg/$m^3$; and/or
the ethylene polymer fraction (A-2) has a density in the range of from 935 to 945 kg/$m^3$; and/or
the density of the ethylene polymer component (A) preferably is in the range of from 925 to 950 kg/$m^3$ more preferably 930 to 945 kg/$m^3$ and/or
the density of the ethylene polymer component (B) preferably is in the range of from 890 kg/$m^3$ to 905 kg/$m^3$.

**8.** The metallocene catalysed multimodal copolymer (P) according to any of the preceding claims, wherein the ethylene polymer component (A) is preferably present in an amount of 32.0 to 55.0 wt% based on the multimodal copolymer

(P), more preferably in an amount of 34.0 to 45.0 wt% based on the multimodal copolymer (P), and
the ethylene polymer component (B) is preferably present in an amount of 68.0 to 45.0 wt% based on the multimodal copolymer (P), and more preferably in an amount of 66.0 to 55.0 wt% based on the multimodal copolymer (P).

**9.** The metallocene catalysed multimodal copolymer (P) according to any of the preceding claims, wherein the at least two alpha-olefin comonomers having from 4 to 10 carbon atoms of the multimodal copolymer (P) are preferably 1-butene and 1-hexene and/or wherein the alpha-olefin comonomer having from 4 to 10 carbon atoms of ethylene polymer component (A) is different from the alpha-olefin comonomer having from 4 to 10 carbon atoms of ethylene polymer component (B), preferably wherein the alpha-olefin comonomer having from 4 to 10 carbon atoms of ethylene polymer component (A) is 1-butene and the alpha-olefin comonomer having from 4 to 10 carbon atoms of ethylene polymer component (B) is 1-hexene.

**10.** Film comprising a metallocene catalysed multimodal copolymer (P) according to any of the preceding claims 1 to 9.

**11.** Film according to claim 10, wherein the film comprises at least one layer comprising the metallocene catalysed multimodal copolymer (P), whereby the at least one layer of the comprises at least 50 wt%, more preferably at least 60 wt%, even more preferably at least 70 wt%, yet more preferably at least 80 wt%, of the metallocene catalysed multimodal copolymer (P) according to any of the preceding claims 1 to 9.

**12.** Film according to claim 10 or 11, wherein the film is **characterized by** a sealing initiation temperature determined as described in the experimental part on a blown film with a thickness of 40 μm of below 82°C, preferably in the range of 60 to 80°C, more preferably in the range of 65°C to 78°C, like 68°C to 78°C.

**13.** Film according to any of the claims 10 to 12, wherein the film is **characterized by** a dart-drop impact strength (DDI) determined according to ASTM D1709, method A on a 40 μm monolayer test blown film of at least 650 g up to 1500 g , preferably 680 g to 1300 g and more preferably 700 g to 1200 g.

**14.** Film according to any of the claims 10 to 12, wherein the film is **characterized by** having at least

a) a sealing initiation temperature determined as described in the experimental part on a blown film with a thickness of 40 μm of below 82°C, preferably in the range of 60 to 80°C, more preferably in the range of 65°C to 78°C, like 68°C to 78°C,
and one or both of the following properties b) and c)
b) a dart-drop impact strength (DDI) determined according to ASTM D1709, method A on a 40 μm monolayer test blown film of at least 650 g up to 1500 g , preferably 680 g to 1300 g and more preferably 700 g to 1200 g,
c) a haze (measured on a 40 μm monolayer test blown film according to ASTM D 1003-00) of below 25 %, preferably between 2 % and 22 %, more preferable between 5 % and 20 %.

**15.** Use of a film according to any of the preceding claims 10 to 14 as packing material, in particular as a packing material for food and/or medical products.

**Patentansprüche**

**1.** Metallocen-katalysiertes, multimodales Copolymer (P) von Ethylen mit wenigstens zwei verschiedenen Comonomeren, die aus Alpha-Olefinen mit 4 bis 10 Kohlenstoffatomen ausgewählt sind, bestehend aus:

(i) 30,0 bis 70,0 Gew.-%, basierend auf dem Metallocen-katalysierten, multimodalen Copolymer (P), einer Ethylenpolymer-Komponente (A), die eine Ethylenpolymer-Fraktion (A-1) und eine Ethylenpolymer-Fraktion (A-2) umfasst, und
(ii) 70,0 bis 30,0 Gew.-%, basierend auf dem Metallocen-katalysierten, multimodalen Copolymer (P), einer Ethylenpolymer-Komponente (B),

wobei die Ethylenpolymer-Komponente (A) aufweist:

• eine Dichte im Bereich von 920 bis 950 kg/$m^3$ und eine Schmelzflussrate ($MFR_2$) (190°C, 2,16 kg, ISO 1133) im Bereich von 2,0 bis 40,0 g/10 min,

wobei die Ethylenpolymer-Fraktion (A-1) aufweist:

• eine Dichte im Bereich von 920 bis 960 kg/$m^3$ und eine Schmelzflussrate ($MFR_2$) (190°C, 2,16 kg, ISO 1133) im Bereich von 1,0 bis 50,0 g/10 min,

wobei die Ethylenpolymer-Fraktion (A-2) aufweist:

• eine Dichte im Bereich von 930 bis 950 kg/$m^3$ und eine Schmelzflussrate ($MFR_2$) (190°C, 2,16 kg, ISO 1133) im Bereich von 3,0 bis 40,0 g/10 min,

wobei das Verhältnis der Schmelzflussrate ($MFR_2$) der Ethylenpolymer-Fraktion (A-1) zu der Schmelzflussrate ($MFR_2$) der Ethylenpolymer-Komponente (A) größer als 0,3 ist,
wobei die Ethylenpolymer-Komponente (B) aufweist:

• eine Dichte im Bereich von 880 bis 915 kg/$m^3$ und eine Schmelzflussrate ($MFR_2$) (190°C, 2,16 kg, ISO 1133) im Bereich von 0,01 bis 1,5 g/10 min, und

wobei das multimodale Copolymer (P) aufweist:

• eine Dichte im Bereich von 905,0 bis 916,5 kg/$m^3$ und eine Schmelzflussrate ($MFR_2$) (190°C, 2,16 kg, ISO 1133) im Bereich von 0,5 bis 2,5 g/10 min, und
• ein Verhältnis der Schmelzflussrate ($MFR_2$) der Ethylenpolymer-Komponente (A) zu der Schmelzflussrate ($MFR_2$) des multimodalen Copolymers (P) von größer als 2,1.

**2.** Metallocen-katalysiertes, multimodales Copolymer (P) nach Anspruch 1, wobei die Ethylenpolymer-Fraktion (A-1) vorzugsweise eine Schmelzflussrate ($MFR_2$) von 1,5 bis 40,0 g/10 min, besser von 2,0 bis 30,0 g/10 min und noch besser von 2,5 bis 20,0 g/10 min aufweist und/oder die Ethylenpolymer-Fraktion (A-2) vorzugsweise eine Schmelzflussrate ($MFR_2$) von 3,2 bis 30,0 g/10 min und besser von 3,5 bis 20,0 g/10 min aufweist, und/oder
die Ethylenpolymer-Komponente (A) vorzugsweise eine Schmelzflussrate ($MFR_2$) von 2,5 bis 30 g/10 min, besser von 3,0 bis 20 g/10 min und noch besser von 3,2 bis 10 g/10 min aufweist und/oder die Ethylenpolymer-Komponente (B) vorzugsweise eine Schmelzflussrate ($MFR_2$) von 0,05 bis 1,5 g/10 min, besser von 0,1 bis 1,3 g/10 min und noch besser von 0,2 bis 1,2 g/10 min aufweist.

**3.** Metallocen-katalysiertes, multimodales Copolymer (P) nach Anspruch 1 oder 2, wobei das Verhältnis der Schmelzflussrate ($MFR_2$) der Ethylenpolymer-Fraktion (A-1) zu der Schmelzflussrate ($MFR_2$) der Ethylenpolymer-Komponente (A) vorzugsweise im Bereich von 0,50 bis 1,0, besser von 0,60 bis 1,0 und noch besser von 0,70 bis 1,0 liegt.

**4.** Metallocen-katalysiertes, multimodales Copolymer (P) nach einem der vorstehenden Ansprüche 1 bis 3, wobei das Verhältnis der Schmelzflussrate ($MFR_2$) der Ethylenpolymer-Komponente (A) zu der Schmelzflussrate ($MFR_2$) des endgültigen Metallocen-katalysierten, multimodalen Copolymers (P) vorzugsweise 2,3 bis 12,0, besser 2,5 bis 10,0 und noch besser 2,8 bis 8,0 beträgt.

**5.** Metallocen-katalysiertes, multimodales Copolymer (P) nach einem der vorstehenden Ansprüche, wobei die Schmelzflussrate ($MFR_2$) des multimodalen Copolymers (P) vorzugsweise im Bereich von 0,8 bis 2,3 g/10 min und besser von 1,0 bis 2,2 g/10 min liegt.

**6.** Metallocen-katalysiertes, multimodales Copolymer (P) nach einem der vorstehenden Ansprüche, wobei das Verhältnis der Schmelzflussrate ($MFR_{21}$) (190°C, 21,6 kg, ISO 1133) zu der Schmelzflussrate ($MFR_2$) (190°C, 2,16 kg, ISO 1133), d.h. $MFR_{21}/MFR_2$, im Bereich von 10 bis 28, vorzugsweise von 12 bis 26 und besser von 15 bis 24 liegt.

**7.** Metallocen-katalysiertes, multimodales Copolymer (P) nach einem der vorstehenden Ansprüche, wobei:

die Ethylenpolymer-Fraktion (A-1) vorzugsweise eine Dichte im Bereich von 925 kg/$m^3$ bis 955 kg/$m^3$ und besser von 930 kg/$m^3$ bis 950 kg/$m^3$ aufweist, und/oder
die Ethylenpolymer-Fraktion (A-2) eine Dichte im Bereich von 935 bis 945 kg/$m^3$ aufweist, und/oder
die Dichte der Ethylenpolymer-Komponente (A) vorzugsweise im Bereich von 925 bis 950 kg/$m^3$ und besser von 930 bis 945 kg/$m^3$ liegt, und/oder
die Dichte der Ethylenpolymer-Komponente (B) vorzugsweise im Bereich von 890 kg/$m^3$ bis 905 kg/$m^3$ liegt.

**8.** Metallocen-katalysiertes, multimodales Copolymer (P) nach einem der vorstehenden Ansprüche, wobei die Ethylenpolymer-Komponente (A) vorzugsweise mit einem Anteil von 32,0 bis 55,0 Gew.-% basierend auf dem multimodalen Copolymer (P) und besser mit einem Anteil von 34,0 bis 45,0 Gew.-% basierend auf dem multimodalen Copolymer (P) anwesend ist, und
die Ethylenpolymer-Komponente (B) vorzugsweise mit einem Anteil von 68,0 bis 45,0 Gew.-% basierend auf dem multimodalen Copolymer (P) und besser mit einem Anteil von 66,0 bis 55,0 Gew.-% basierend auf dem multimodalen Copolymer (P) anwesend ist.

**9.** Metallocen-katalysiertes, multimodales Copolymer (P) nach einem der vorstehenden Ansprüche, wobei die wenigstens zwei Alpha-Olefin-Comonomere mit 4 bis 10 Kohlenstoffatomen des multimodalen Copolymers (P) vorzugweise 1-Buten und 1-Hexen sind und/oder wobei das Alpha-Olefin-Comonomer mit 4 bis 10 Kohlenstoffatomen der Ethylenpolymer-Komponente (A) verschieden von dem Alpha-Olefin-Comonomer mit 4 bis 10 Kohlenstoffatomen der Ethylenpolymer-Komponente (B) ist, wobei vorzugsweise das Alpha-Olefin-Comonomer mit 4 bis 10 Kohlenstoffatomen der Ethylenpolymer-Komponente (A) 1-Buten ist und das Alpha-Olefin-Comonomer mit 4 bis 10 Kohlenstoffatomen der Ethylenpolymer-Komponente (B) 1-Hexen ist.

**10.** Folie, die ein Metallocen-katalysiertes, multimodales Copolymer (P) gemäß den vorstehenden Ansprüchen 1 bis 9 umfasst.

**11.** Folie nach Anspruch 10, wobei die Folie wenigstens eine Schicht umfasst, die das Metallocen-katalysierte, multimodale Copolymer (P) umfasst, wobei die wenigstens eine Schicht wenigstens 50 Gew.-%, vorzugsweise wenigstens 60 Gew.-%, besser wenigstens 70 Gew.-% und noch besser wenigstens 80 Gew.-% des Metallocen-katalysierten, multimodalen Copolymers (P) gemäß einem der vorstehenden Ansprüche 1 bis 9 umfasst.

**12.** Folie nach Anspruch 10 oder 11, wobei die Folie durch eine Versiegelungsinitiierungstemperatur, bestimmt wie in dem experimentellen Teil beschrieben, auf einer Blasfolie mit einer Dicke von 40 μm von unter 82°C, vorzugsweise im Bereich von 60°C bis 80°C und besser im Bereich von 65°C bis 78°C, wie etwa 68°C bis 78°C aufweist.

**13.** Folie nach einem der Ansprüche 10 bis 12, wobei die Folie durch eine Durchstoßfestigkeit, bestimmt gemäß ASTM D1709, Methode A, auf einer 40 μm dicken, einschichtigen Testblasfolie von wenigstens 650 g bis 1500 g, vorzugsweise von 680 g bis 1300 g und besser von 700 g bis 1200 g aufweist.

**14.** Folie nach einem der Ansprüche 10 bis 12, wobei die Folie **gekennzeichnet ist durch** wenigstens:

a) eine Versiegelungsinitiierungstemperatur, bestimmt wie in dem experimentellen Teil beschrieben, auf einer Blasfolie mit einer Dicke von 40 μm von unter 82°C, vorzugsweise im Bereich von 60 bis 80°C und besser im Bereich von 65°C bis 78°C wie etwa von 68°C bis 78°C,
und eine oder beide der folgenden Eigenschaften b) und c):
b) eine Durchstoßfestigkeit, bestimmt gemäß ASTM D1709, Methode A, auf einer 40 μm dicken, einschichtigen Testblasfolie von wenigstens 650 g bis 1500 g, vorzugsweise von 680 g bis 1300 g und besser von 700 g bis 1200 g,
c) eine Trübung (gemessen auf einer 40 μm dicken, einschichtigen Testblasfolie gemäß ASTM D 1003-00) von unter 25 %, vorzugsweise zwischen 2 % und 22 % und besser zwischen 5 % und 20 %.

**15.** Verwendung einer Folie gemäß den vorstehenden Ansprüchen 10 bis14 als ein Verpackungsmaterial und insbesondere als ein Verpackungsmaterial für Lebensmittel und/oder medizinische Produkte.

## Revendications

**1.** Copolymère multimodal (P) d'éthylène catalysé par métallocène avec au moins deux comonomères différents choisis parmi les alpha-oléfines ayant de 4 à 10 atomes de carbone, qui consiste en

(i) 30,0 à 70,0 % en poids, sur la base du copolymère multimodal catalysé par métallocène (P), d'un composant polymère d'éthylène (A), comprenant une fraction de polymère d'éthylène (A-1) et une fraction de polymère d'éthylène (A-2), et
(ii) 70,0 à 30,0 % en poids, sur la base du copolymère multimodal catalysé par métallocène (P), d'un composant polymère d'éthylène (B),

le composant polymère d'éthylène (A) ayant

- une densité dans la plage allant de 920 à 950 kg/m$^3$ et un $MFR_2$ (190 °C, 2,16 kg, ISO 1133) dans la plage allant de 2,0 à 40,0 g/10 min ;

la fraction de polymère d'éthylène (A-1) ayant

- une densité dans la plage allant de 920 à 960 kg/m$^3$ et un $MFR_2$ (190 °C, 2,16 kg, ISO 1133) dans la plage allant de 1,0 à 50,0 g/10 min ;

la fraction de polymère d'éthylène (A-2) ayant

- une densité dans la plage allant de 930 à 950 kg/m$^3$ et un $MFR_2$ (190 °C, 2,16 kg, ISO 1133) dans la plage allant de 3,0 à 40,0 g/10 min ; et

le rapport entre le $MFR_2$ de la fraction de polymère d'éthylène (A-1) et le $MFR_2$ du composant polymère d'éthylène (A) étant supérieur à 0,3 ;
le composant polymère d'éthylène (B) ayant

- une densité dans la plage allant de 880 à 915 kg/m$^3$ et un $MFR_2$ (190 °C, 2,16 kg, ISO 1133) dans la plage allant de 0,01 à 1,5 g/10 min ; et

le copolymère multimodal (P) ayant

- une densité dans la plage allant de 905,0 à 916,5 kg/m$^3$ et un $MFR_2$ (190 °C, 2,16 kg, ISO 1133) dans la plage allant de 0,5 à 2,5 g/10 min, et
- un rapport entre le $MFR_2$ du composant polymère d'éthylène (A) et le $MFR_2$ du copolymère multimodal (P) de plus de 2,1.

**2.** Copolymère multimodal catalysé par métallocène (P) selon la revendication 1, dans lequel

la fraction de polymère d'éthylène (A-1) a préférentiellement un $MFR_2$ de 1,5 à 40,0 g/10 min, plus préférentiellement de 2,0 à 30,0 g/10 min et encore plus préférentiellement de 2,5 à 20,0 g/10 min ; et/ou la fraction de polymère d'éthylène (A-2) a préférentiellement un $MFR_2$ de 3,2 à 30,0 g/10 min, plus préférentiellement de 3,5 à 20,0 g/10 min ; et/ou
le composant polymère d'éthylène (A) a préférentiellement un $MFR_2$ de 2,5 à 30 g/10 min, plus préférentiellement de 3,0 à 20,0 g/10 min et encore plus préférentiellement de 3,2 à 10,0 g/10 min ; et/ou le composant polymère d'éthylène (B) a préférentiellement un $MFR_2$ de 0,05 à 1,5 g/10 min, plus préférentiellement de 0,1 à 1,3 g/10 min et encore plus préférentiellement de 0,2 à 1,2 g/10 min.

**3.** Copolymère multimodal catalysé par métallocène (P) selon l'une quelconque des revendications 1 ou 2 précédentes, dans lequel le rapport entre le $MFR_2$ de la fraction de polymère d'éthylène (A-1) et le $MFR_2$ du composant polymère d'éthylène (A) est préférentiellement dans une plage allant de 0,50 à 1,0, plus préférentiellement dans la plage allant de 0,60 à 1,0 et encore plus préférentiellement de 0,70 à 1,0.

**4.** Copolymère multimodal catalysé par métallocène (P) selon l'une quelconque des revendications 1 à 3 précédentes, dans lequel le rapport entre le $MFR_2$ du composant polymère d'éthylène (A) et le $MFR_2$ du copolymère multimodal catalysé par métallocène final (P) est préférentiellement de 2,3 à 12,0, plus préférentiellement de 2,5 à 10,0 et encore plus préférentiellement de 2,8 à 8,0.

**5.** Copolymère multimodal catalysé par métallocène (P) selon l'une quelconque des revendications précédentes, dans lequel le $MFR_2$ du copolymère multimodal (P) est préférentiellement dans la plage allant de 0,8 à 2,3 g/10 min, plus préférentiellement de 1,0 à 2,2 g/10 min.

**6.** Copolymère multimodal catalysé par métallocène (P) selon l'une quelconque des revendications précédentes, dans lequel le rapport entre le $MFR_{21}$ (190 °C, 21,6 kg, ISO 1133) et le $MFR_2$ (190 °C, 2,16 kg, ISO 1133), $MFR_{21}/MFR_2$, est dans la plage allant de 10 à 28, préférentiellement dans la plage allant de 12 à 26, plus préférentiellement de 15 à 24.

**7.** Copolymère multimodal catalysé par métallocène (P) selon l'une quelconque des revendications précédentes, dans lequel

la fraction de polymère d'éthylène (A-1) a préférentiellement une densité dans la plage allant de 925 kg/m$^3$ à 955 kg/m$^3$, plus préférentiellement de 930 kg/m$^3$ à 950 kg/m$^3$ ; et/ou
la fraction de polymère d'éthylène (A-2) a une densité dans la plage allant de 935 à 945 kg/m3 ; et/ou
la densité du composant polymère d'éthylène (A) est préférentiellement dans la plage allant de 925 à 950 kg/m$^3$, plus préférentiellement de 930 à 945 kg/m$^3$ ; et/ou
la densité du composant polymère d'éthylène (B) est préférentiellement dans la plage allant de 890 kg/m$^3$ à 905 kg/m$^3$.

**8.** Copolymère multimodal catalysé par métallocène (P) selon l'une quelconque des revendications précédentes, dans lequel le composant polymère d'éthylène (A) est préférentiellement présent en une quantité de 32,0 à 55,0 % en poids par rapport au copolymère multimodal (P), plus préférentiellement en une quantité de 34,0 à 45,0 % en poids par rapport au copolymère multimodal (P), et
le composant polymère d'éthylène (B) est préférentiellement présent en une quantité de 68,0 à 45,0 % en poids par rapport au copolymère multimodal (P), et plus préférentiellement en une quantité de 66,0 à 55,0 % en poids par rapport au copolymère multimodal (P).

**9.** Copolymère multimodal catalysé par métallocène (P) selon l'une quelconque des revendications précédentes, dans lequel les au moins deux comonomères alpha-oléfiniques ayant de 4 à 10 atomes de carbone du copolymère multimodal (P) sont préférentiellement le 1-butène et le 1-hexène et/ou dans lequel le comonomère alpha-oléfinique ayant de 4 à 10 atomes de carbone du composant polymère d'éthylène (A) est différent du comonomère alpha-oléfinique ayant de 4 à 10 atomes de carbone du composant polymère d'éthylène (B), préférentiellement dans lequel le comonomère d'alpha-oléfine ayant de 4 à 10 atomes de carbone du composant polymère d'éthylène (A) est le 1-butène et le comonomère alpha-oléfinique ayant de 4 à 10 atomes de carbone du composant polymère d'éthylène (B) est le 1-hexène.

**10.** Film comprenant un copolymère multimodal catalysé par métallocène (P) selon l'une quelconque des revendications1 à 9 précédentes.

**11.** Film selon la revendication 10, dans lequel le film comprend au moins une couche comprenant le copolymère multimodal catalysé par métallocène (P), l'au moins une couche comprenant au moins 50 % en poids, plus préférentiellement au moins 60 % en poids, encore plus préférentiellement au moins 70 % en poids, encore plus préférentiellement au moins 80 % en poids, du copolymère multimodal catalysé par métallocène (P) selon l'une quelconque des revendications 1 à 9 précédentes.

**12.** Film selon la revendication 10 ou 11, dans lequel le film est **caractérisé par** une température d'initiation du scellage déterminée comme décrit dans la partie expérimentale sur un film soufflé d'une épaisseur de 40 μm inférieure à 82 °C, préférentiellement dans la plage allant de 60 à 80 °C, plus préférentiellement dans la plage allant de 65 °C à 78 °C, comme 68 °C à 78 °C.

**13.** Film selon l'une quelconque des revendications 10 à 12, dans lequel le film est **caractérisé par** une résistance à l'impact à fléchette tombante (DDI) déterminée selon ASTM D1709, méthode A sur un film soufflé d'essai monocouche de 40 μm d'au moins 650 g à 1 500 g, préférentiellement de 680 g à 1 300 g et plus préférentiellement de 700 g à 1 200 g.

**14.** Film selon l'une quelconque des revendications 10 à 12, dans lequel le film est **caractérisé en ce qu'**il a au moins

a) une température d'initiation du scellage déterminée comme décrit dans la partie expérimentale sur un film soufflé d'une épaisseur de 40 μm inférieure à 82 °C, préférentiellement dans la plage allant de 60 à 80 °C, plus préférentiellement dans la plage allant de 65 °C à 78 °C, comme 68 °C à 78 °C,
et l'une ou les deux des propriétés b) et c) suivantes
b) une résistance à l'impact à fléchette tombante (DDI) déterminée selon la norme ASTM D1709, méthode A, sur un film soufflé d'essai monocouche de 40 μm, d'au moins 650 g jusqu'à 1 500 g, préférentiellement de 680 g à 1 300 g, et plus préférentiellement de 700 g à 1 200 g,
c) un trouble (mesuré sur un film soufflé d'essai monocouche de 40 μm selon ASTM D 1003-00) inférieur à 25 %, préférentiellement compris entre 2 % et 22 %, plus préférentiellement entre 5 % et 20 %.

15. Utilisation d'un film selon l'une quelconque des revendications 10 à 14 précédentes comme matériau d'emballage, en particulier comme matériau d'emballage pour des produits alimentaires et/ou médicaux.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021009189 A
- WO 2021009190 A
- WO 2021009191 A
- WO 2021009192 A
- WO 2016198273 A
- EP 129368 A
- WO 9856831 A
- WO 0034341 A
- EP 260130 A
- WO 9728170 A
- WO 9846616 A
- WO 9849208 A
- WO 9912981 A
- WO 9919335 A
- EP 423101 A
- EP 537130 A


### Non-patent literature cited in the description


- **HAGSTRÖM.** *The Polymer Processing Society,* 19 August 1997
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **CASTIGNOLLES, P. ; GRAF, R. ; PARKINSON, M. ; WILHELM, M. ; GABORIEAU, M.** *Polymer,* 2009, vol. 50, 2373
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **RESCONI, L. ; CAVALLO, L. ; FAIT, A. ; PIEMONTESI, F.** *Chem. Rev.,* 2000, vol. 100, 1253
- *CHEMICAL ABSTRACTS,* 151840-68-5